(19) Europäisches Patentamt European Patent Office Office européen des brevets

(11) **EP 4 787 243 A1**

(12) **EUROPEAN PATENT APPLICATION**

(43) Date of publication:
05.08.2026 Bulletin 2026/32

(21) Application number: 26151643.9

(22) Date of filing: 13.01.2026

(51) International Patent Classification (IPC):
*G06N 3/08* (2023.01) *G06N 20/00* (2019.01)

(52) Cooperative Patent Classification (CPC):
**G06N 20/00; G06N 3/08; G06N 7/01;** G08G 1/0145;
G08G 1/166

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.01.2025 IT 202500000510**

(71) Applicant: **Vodafone Automotive S.p.A.
21100 Varese (VA) (IT)**

(72) Inventors:
• **PEDOL, Mario**
London, W2 6BY (GB)
• **SOLINAS, Alessandro**
London, W2 6BY (GB)
• **PERNIGOTTO, Manuel**
London, W2 6BY (GB)
• **TUSCANO, Andrea**
London, W2 6BY (GB)

(74) Representative: **Boult Wade Tennant LLP
Salisbury Square House
8 Salisbury Square
London EC4Y 8AP (GB)**

(54) **TRAJECTORY PREDICTION**

(57) Methods and apparatus for generating a training data set for a trajectory prediction model, training a trajectory prediction model and predicting a future trajectory of an object. Trajectory data is received comprising a plurality of trajectory time series. Each trajectory time series is normalised to generate a corresponding normalised trajectory time series. The normalised trajectory time series are clustered into a plurality of trajectory clusters. For each normalised trajectory time series, a measure of variation of speed of the object during the trajectory represented by the normalised trajectory time series is determined. A training data set is generated by selecting a subset of the normalised trajectory time series by sampling normalised trajectory time series from each of the trajectory clusters in dependence on the measures of variation of speed of the normalised trajectory time series in each trajectory cluster.

FIG. 1

EP 4 787 243 A1

**Description**

TECHNICAL FIELD

The present disclosure relates to methods and apparatus for generating a training data set for a trajectory prediction model, for training a trajectory prediction model and for predicting a future trajectory of an object.

BACKGROUND

The ability to predict a trajectory of an object has applications across a wide range fields. For example, trajectory prediction may have applications in areas such as autonomous vehicles and intelligent transportation systems.

The field of predicting future trajectories of objects involves the development of models and algorithms to foresee the paths of moving entities based on current and historical data. This can be critical for enhancing the decision-making capabilities of autonomous vehicles, driver assistance systems, and intelligent transportation systems.

**In** the context of autonomous vehicles, trajectory prediction enables the system to anticipate the movement of vehicles, pedestrians, and other objects within its environment. This foresight is crucial for collision avoidance, optimising route planning, and ensuring safe interactions with other traffic participants. Advanced machine learning techniques, such as deep learning and recurrent neural networks, may be employed to achieve high accuracy in these predictions.

Driver assistance systems utilise trajectory prediction to augment human drivers' situational awareness and reaction times. By predicting potential hazards and the likely movements of surrounding traffic, these systems can provide timely alerts or autonomously take preemptive actions to prevent accidents.

Intelligent transportation systems leverage trajectory predictions to improve traffic flow and manage congestion in urban environments. By understanding the trajectory patterns of numerous vehicles, these systems can optimize signal timings, reroute traffic dynamically, and enhance the overall efficiency of transportation networks.

Trajectory prediction is thus a pivotal element in the advancement of modern vehicular technologies, contributing to safer and more efficient transportation solutions.

**It** is in this context the present disclosure has been devised

SUMMARY

Trajectory prediction models are typically configured to predict or forecast a future trajectory of an object based on a historical trajectory of the object (e.g., a trajectory undergone by the object immediately prior to predicting the future trajectory of the object). Many trajectory prediction models are trained using machine learning methods. Such machine learning training methods typical comprise supervised training based on a training data set comprising a plurality of previously recorded trajectories. For example, a trajectory prediction model may be trained to predict the future trajectory of a vehicle, such as a car, based on a historical trajectory of the vehicle. Such a trajectory prediction model may be trained using supervised learning based on a training data set comprising a plurality of observed trajectories of vehicles. Such observed trajectories of vehicles may be collected through observation (e.g., measurement) of the position of one or more vehicles, for example, when the vehicles are undergoing a number of different journeys.

**It** has been realised that trajectory prediction models which are trained using a training data set can provide less accurate trajectory predictions when used to predict trajectories occurring outside of the geographic regions and/or environments for which the training data set is collected. Furthermore, trajectory prediction models can become biased towards their training data set and training data sets may not include a balanced representation of different types of trajectories.

Methods and apparatus are disclosed herein for generating a generalised training data set based on a plurality of observed object trajectories. A generalised training data set may be used to train a trajectory prediction model. Such a trained trajectory prediction model may exhibit improved trajectory prediction as a result of the generalised training data set on which it is trained.

According to a first aspect of the present disclosure there is provided a computer implemented method of generating a training data set for a trajectory prediction model, the method comprising: receiving trajectory data comprising a plurality of trajectory time series each trajectory time series comprising a time series of geographic locations representing the geographic position of an object during a trajectory of the object; normalising each trajectory time series to generate a corresponding normalised trajectory time series, wherein normalising each trajectory time series comprises transforming each geographic location in the trajectory time series to a positional difference relative to a local reference point for that trajectory time series; clustering the normalised trajectory time series into a plurality of trajectory clusters; determining, for each normalised trajectory time series, a measure of variation of speed of the object during the trajectory represented by the normalised trajectory time series; and generating the training data set by selecting a subset of the normalised trajectory time series, wherein the subset of the normalised trajectory time series is selected by sampling normalised trajectory time series from each of the trajectory clusters in dependence on the measures of variation of speed of the normalised trajectory time series in each trajectory cluster.

Normalising the trajectory time series to generate the normalised trajectory time series serves to generate a plurality of normalised trajectory time series which do not depend on the geographic regions in which they occurred. The normalised trajectory time series instead depend on the local shape of the trajectories, such that different trajectories occurring in different geographic regions but having similar trajectory shapes will generate similar normalised trajectory time series. Accordingly, the training of a trajectory prediction model based on the normalised trajectory time series will learn features of the local trajectory shapes without dependence on the geographic region in which the trajectories occurred.

Clustering the normalised trajectory time series results in similar normalised trajectory time series being clustered together in the same cluster. This clustering allows sampling of normalised trajectory time series across different clusters so as to obtain a generalised and balanced training data set which is not biased towards a particular type of trajectory (e.g., a type of trajectory which is observed more often then other types of trajectory). For example, in some instances linear trajectories may be observed more often than non-linear trajectories. If all observed trajectories were to be used to train a trajectory prediction model then linear trajectories may be over-represented in a training data set and the trained trajectory prediction model may be biased towards linear trajectories. Clustering of trajectories allows for sampling of different trajectory types to be included in a training data set so as to provide provide a generalised and/or balanced representation of different trajectory types in a training data set.

It has been found that object speed is a useful variable for describing an object trajectory since it can be descriptive of the trajectory length and/or shape. The determined measure of variation of speed can therefore be used to characterise different trajectory types. As such the determined measure of variation of speed has been found to be an effective variable for sampling different types of trajectory. For example, sampling of the normalised trajectory time series in dependence of the determined measure of variation of speed.

The trajectory time series may comprise time series of observed (measured) geographic positions of an object. The object may comprise any physical object which undergoes movement. For example, the object may comprise a human (e.g., in the form of a walking pedestrian) or animal or may comprise a non-living object such as a vehicle. In examples, in which the object comprises a vehicle, the movement and trajectory of the vehicle may be controlled by a human operator (driver) and/or may be controlled by an autonomous driving system. The geographic position of the object may be observed during the trajectory, for example, by direct or indirect measurement. For example, one or more devices for measuring geographic position may be mounted on the object and may measure the position of the object during the trajectory. Additionally or alternatively one or more devices (e.g., camera, lidar etc.) may be arranged to remotely determine the position of the object during the trajectory.

A trajectory time series may comprise a time-ordered list of geographic positions of the object during the trajectory. For example, a trajectory time series may comprise a time-ordered list of latitudes and longitudes at which the object was located at different times during the trajectory. The trajectory time series may include one or more further variables such as time-stamps associated with each geographic location in the time series and/or a speed at which the object is moving during the trajectory.

The local reference point relative to which the geographic positions in a trajectory time series are transformed to a positional difference to form a normalised trajectory time series, may be the same for all geographic positions in a given trajectory time series. Different local reference points may be used for different trajectory time series. For example, the local reference point for a given trajectory time series may comprise a starting point of the trajectory times series (i.e., the first geographic location in the trajectory time series). The normalised trajectory time series comprises a time series of geographic locations each expressed as a difference between the local reference point and the corresponding position in the corresponding trajectory time series. A positional difference of a position in a corresponding trajectory time series relative to a local reference point may comprise a difference between the latitude of the position in the trajectory time series and the latitude of the local reference point and a difference between the longitude of the position in the trajectory time series and the longitude of the local reference point.

Clustering the normalised trajectory time series may comprise clustering each normalised trajectory time series into a cluster comprising relatively similar normalised trajectory time series. For example, the clustering may comprise clustering the normalised trajectory time series into a cluster so as to minimise a measure of difference (e.g., a distance measure) between different normalised trajectory time series in the same cluster. The clustering may comprise an unsupervised learning process. The clustering may comprise k-means clustering.

The local reference point for that trajectory time series may comprise a starting point of the trajectory time series.

Clustering the normalised trajectory time series into a plurality of trajectory clusters may comprise: determining whether each normalised trajectory time series represents a linear trajectory or a non-linear trajectory, assigning the normalised trajectory time series representing linear trajectories to a linear trajectory cluster; and clustering the normalised trajectory time series representing non-linear trajectories into a plurality of non-linear trajectory clusters.

Determining whether each normalised trajectory time series represents a linear trajectory or a non-linear trajectory may comprise, for each normalised trajectory time series: fitting a linear function to the normalised trajectory time series; determining a measure of the difference between the fitted linear function and the normalised trajectory time series; and determining that the normalised trajectory time series is a linear trajectory if the determined measure of difference is below a threshold difference.

Clustering the normalised trajectory time series into a plurality of trajectory clusters may comprise determining a measure of similarity between different normalised trajectory time series and clustering the normalised trajectory time series into the plurality of trajectory clusters in dependence on the determined measure of similarity.

Determining the measure of similarity between different normalised trajectory time series may comprise performing dynamic time warping to determining a dynamic time warping distance between different trajectory time series.

The measure of variation of speed of the object during the trajectory represented by the normalised trajectory time series may comprises a variance of the speed of the object during the trajectory.

Sampling normalised trajectory time series from each of the trajectory clusters may comprise sampling substantially evenly from each trajectory clusters.

Sampling normalised trajectory time series from each of the trajectory clusters may comprise: for each trajectory cluster, binning the normalised trajectory time series in the trajectory cluster into a plurality of speed bins based on the measure of variation of speed determined for each normalised trajectory time series; and sampling normalised trajectory time series from each of the speed bins of each of the trajectory clusters.

Sampling normalised trajectory time series from each of the speed bins of each of the trajectory clusters may comprise sampling substantially evenly from each of the speed bins.

Sampling normalised trajectory time series from each of the speed bins of each of the trajectory clusters may comprise performing a weighted sampling from each of the speed bins.

The weighted sampling from each of the speed bins may comprise: determining a weight for each speed bin; sampling a number of normalised trajectory time series from each speed bin wherein the number of normalised trajectory time series sampled from each speed bin is proportionally to the weight determined for that speed bin.

Determining a weight for each speed bin may comprise determining a weight in dependence on a difference between a maximum value and a minimum value of the determined measure speed for normalised trajectory time series in that speed bin. The weight may be proportional to the difference between a maximum value and a minimum value of the determined measure speed for normalised trajectory time series in that speed bin.

According a second aspect of the present disclosure there is provided a computer implemented method of training a trajectory prediction model, the method comprising: receiving a training data set generated using a method according to the first aspect, and training the trajectory prediction model based on the training data set, wherein the trajectory prediction model is configured through the training to predict a future trajectory of an object based on a historical trajectory of the object.

According to a third aspect of the present disclosure there is provided a computer implemented method of training a trajectory prediction model, the method comprising: generating a training data set for a trajectory prediction model using a method according to the first aspect, and training the trajectory prediction model based on the training data set, wherein the trajectory prediction model is configured through the training to predict a future trajectory of an object based on a historical trajectory of the object.

According to a fourth aspect of the present disclosure there is provided a computer implemented method of predicting a future trajectory of an object, the method comprising: receiving historical trajectory data indicative of a trajectory that the object has undergone; providing the historical trajectory data to a trajectory prediction model trained using a method according to the second aspect or the third aspect; and implementing the trained trajectory prediction model to predict a future trajectory of the object based on the historical trajectory data.

According to a fourth aspect of the present disclosure there is provided a computing device configured to: receive trajectory data comprising a plurality of trajectory time series each trajectory time series comprising a time series of geographic locations representing the geographic position of an object during a trajectory of the object; normalise each trajectory time series to generate a corresponding normalised trajectory time series, wherein normalising each trajectory time series comprises transforming each geographic location in the time series to a positional difference relative to a local reference point for that trajectory time series; cluster the normalised trajectory time series into a plurality of trajectory clusters; determine, for each normalised trajectory time series, a measure of variation of speed of the object during the trajectory represented by the normalised trajectory time series; and generate the training data set by selecting a subset of the normalised trajectory time series, wherein the subset of the normalised trajectory time series is selected by sampling normalised trajectory time series from each of the trajectory clusters in dependence on the measures of variation of speed of the normalised trajectory time series in each trajectory cluster.

According to a fifth aspect of the present disclosure there is provided a computer readable medium storing instructions which when executed by a computing device cause the computing device to: receive trajectory data comprising a plurality of trajectory time series each trajectory time series comprising a time series of geographic locations representing the geographic position of an object during a trajectory of the object; normalise each trajectory time series to generate a corresponding normalised trajectory time series, wherein normalising each trajectory time series comprises transforming each geographic location in the time series to a positional difference relative to a local reference point for that trajectory time series; cluster the normalised trajectory time series into a plurality of trajectory clusters; determine, for each normalised trajectory time series, a measure of variation of speed of the object during the trajectory represented by the normalised trajectory time series; and generate the training data set by selecting a subset of the normalised trajectory time series, wherein the subset of the normalised trajectory time series is selected by sampling normalised trajectory time series from each of the trajectory clusters in dependence on the measures of variation of speed of the normalised trajectory time series in each trajectory cluster.

The computer readable medium may comprise a non-transitory computer readable medium.

**It** will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

BRIEF DESCRIPTION OF THE DRAWINGS

Certain examples of the present disclosure will now be described, with reference to the accompanying drawings, in which:

- FIG. 1 is a schematic illustration of an example trajectory of an object;

- FIG. 2 is a schematic illustration of a further example trajectory comprising a plurality of locations;

- FIG. 3 is schematic illustration of an example process of training a trajectory prediction model;

- FIG. 4 is a schematic illustration of an example model inference process;

- FIG. 5 is a flowchart of a method of generating a training data set for a trajectory prediction model;

- FIG. 6 is a schematic illustration of a further example trajectory; and

- FIG. 7 is a schematic illustration of an example electronic device which may be used to implement all or part of any method described herein.

DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

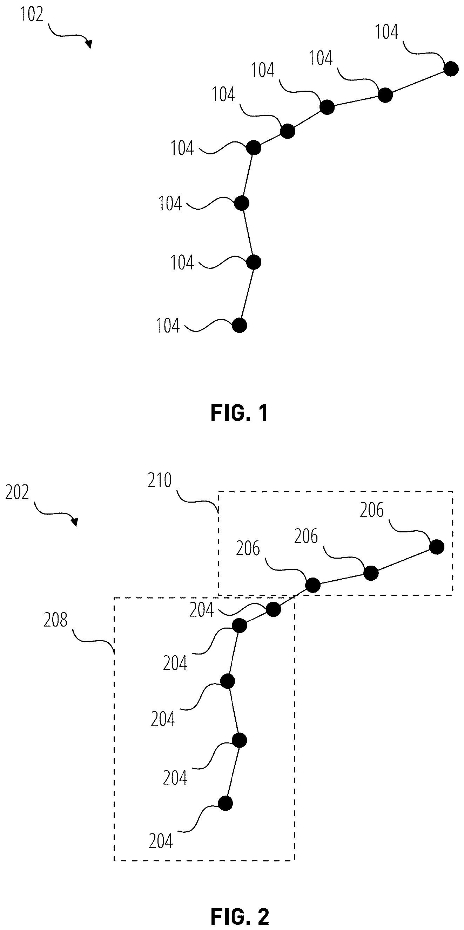

FIG. 1 is a schematic illustration of an example trajectory 102 of an object. The illustration of FIG. 1 represents a plurality of geographic locations 104 at which the object was situated at different times during the trajectory 102. The object may comprise any physical object which undergoes movement and thus is located at different geographic locations at different times. For example, the object may comprise a vehicle such as a land-vehicle (e.g., car, truck, bicycle, motorcycle etc.) a watercraft (e.g., boat, submarine etc.), an aircraft (e.g., aeroplane, helicopter, drone etc.), or spacecraft (e.g., rocket, satellite etc.). Such a vehicle may be controlled by a human operator (driver) and/or an autonomous driving system. In some examples, the object may comprise a living object such as a human (e.g., pedestrian) or animal.

The geographic locations 104 may comprise observed or measured geographic locations of an object. For example, one or more sensors may be arranged to measure the geographic location of the object and may measure a plurality of different locations 104 at which the object is situated at a plurality of different times. In some examples, one or more sensors may be attached to or form part of the object and may therefore undergo movement along with the object. Such one or more sensors may measure their own geographic location (for example, using a global positioning system) and thus the geographic location of the objection. Additionally or alternatively, one or more sensors may be arranged to remotely determine the location of the object at different times. For example, one or more sensing devices such as a camera, radar sensor, lidar sensor etc., may be used to remotely determine the location of the object.

The different locations 104 shown in FIG. 1 represent different locations 104 at which the object is situated at different times during the trajectory 102. The lines extending between locations 104 in FIG. 1 extend between locations 104 in time order. For example, the locations 104 which are adjacent to each other in time-order are joined by lines in order to illustrate the sequence of locations 104 at which the object is situated during the trajectory 102.

The trajectory 102 may be represented by a trajectory time series. A trajectory time series comprises a time series of geographic locations 104 representing the geographic position of the object during the trajectory 102 of the object. The time series of geographic locations 104 may comprise a time-order list of geographic locations 104 of the object. That is, the locations 104 at which the object is positioned may be ordered in the time-order in which the object was positioned at the respective locations 104. The geographic locations may be represented using any suitable co-ordinate system. For example, a geographic location 104 may be represented as a latitude and longitude of the object. In some examples, a geographic location 104 may be additionally represented in a third dimension such as an altitude of the object. In some examples, a trajectory time series may include one or more further variables associated with each entry (geographic position) in the time series. For example, a trajectory time series may include one or more variables such as a time-stamp associated with each geographic location in the time series and/or a speed at which the object is moving during the trajectory (e.g., a speed at which the object is moving when located at each geographic position in the time series). A trajectory times series may further include an identifier to identify the object (which may be referred to as an agent) with which the trajectory is associated. A trajectory time series may be supplemented with one or more additional features derived through feature engineering.

An example trajectory time series is represented in the table below. The example trajectory time series represented in the table below comprises four entries corresponding to four different geographic locations at which an object is located at four different times. Each entry is represented by four variables comprising a time stamp, a latitude, a longitude and a speed. The entries are ordered in sequence of their time stamp. The time stamps (T1-T4) represent a time at which the object was located at the geographic locations indicated by the latitude (Lat1-Lat4) and longitude (Lon1-Lon4) variables. The speeds (S1-S4) represent the speed at which the object was moving at respective times (T1-T4) and when positioned at the respective locations (Lat1-Lat4, Lon1-Lon4).

| Time | Latitude | Longitude | Speed |
|------|----------|-----------|-------|
| T1   | Lat1     | Lon1      | S1    |
| T2   | Lat2     | Lon2      | S2    |

(continued)

| Time | Latitude | Longitude | Speed |
|------|----------|-----------|-------|
| T3 | Lat3 | Lon3 | S3 |
| T4 | Lat4 | Lon4 | S4 |

It will be appreciated that the example trajectory time series represented in the table above is merely an illustrative example and many different variations are possible. For example, one or more alternative or additional variables may be used to represent a trajectory. In some examples, not all of the variables shown in the table above may be included in a time series representation of a trajectory. The number of entries in a trajectory time series may be different to the four entries shown in the table above. For example, a trajectory time series may include more than four entries (locations). In some examples, a trajectory time series may be represented in the form of one or more vectors and/or matrices as opposed to the tabular representation shown above.

A plurality of trajectory time series may be obtained and used to form a training data set. For example, a plurality of trajectory time series may be obtained through measurement of the geographic location of one or more objects whilst undergoing a trajectory. In some examples the location of a plurality of different objects (e.g., different vehicles) may be measured to form a plurality of different trajectory time series relating to trajectories of a plurality of different objects. In some examples, at least some of a plurality of trajectory times series may relate to trajectories undergone by the same object but at different times.

In some examples, a plurality of trajectory time series may be obtained by partitioning a longer journey of an object into a plurality of trajectories. For example, an object (e.g., a vehicle) may undergo a journey and may have its geographic position measured at a plurality of different times during the journey. The geographic positions measured throughout the journey may form a time series of geographic locations. The time series of geographic locations may be partitioned into a plurality of shorter time series to form a plurality of trajectory time series. The trajectory time series may each represent a segment of the overall journey completed by the object.

A training data set comprising a plurality of trajectory time series may be used to train a trajectory prediction model. A trajectory prediction model may be configured to predict or forecast a future trajectory of an object based on a historical trajectory of an object. For example, an object (such as a vehicle) may undergo a trajectory during which its geographic position is measured at a plurality of different times. Such measured geographic positions may form a historical trajectory time series representing a trajectory which the object has undergone. The historical trajectory time series may be provided as an input to a trajectory prediction model which may use the historical trajectory time series to predict a future trajectory of the object in a future time period proceeding the time period represented by the historical trajectory time series.

Whilst each trajectory time series which forms part of a training data set comprises measured geographic locations of an object, a trajectory time series may conceptually be considered to comprise a historical trajectory time series labelled with a known future trajectory time series. In this way a training data set comprising a plurality of trajectory time series can be considered to comprise a labelled dataset comprising a plurality of historical trajectory time series each labelled with a known future trajectory time series.

FIG. 2 is a schematic illustration of a trajectory 202 comprising a plurality of locations 204, 206. The locations 204, 206 and trajectory 202 shown in FIG. 2 may be the same as the trajectory 102 and locations 104 described above with reference to FIG. 1. For example, the locations 204, 206 may all represent observed geographic locations of an object at different times. In the illustration of FIG. 2, the trajectory 202 is divided into a historical trajectory 208 comprising historical locations 204 and a future trajectory 210 comprising future locations 206. The historical locations 204 may be represented in a historical trajectory time series and the future locations 206 may be represented in a future trajectory time series. For the purposes of a training data set, the historical trajectory time series may be considered to be labelled with the future trajectory time series. Whilst the trajectories 208, 210 are referred to as historical 208 and future trajectories 210 respectively, it will be appreciated that in the context of a training data set both the historical trajectory 208 and the future trajectory 210 may comprise measured locations of an object during a single trajectory 202.

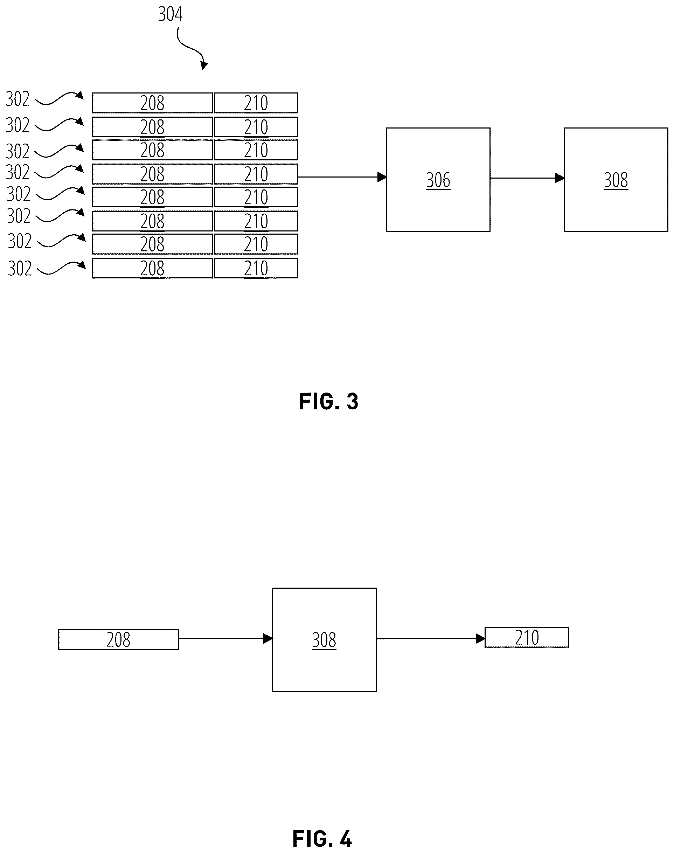

FIG. 3 is schematic illustration of an example process of training a trajectory prediction model 308. The training process is based on a training data set 304 comprising a plurality of trajectory time series 302. Each trajectory time series 302 may conceptually be considered to comprise a historical trajectory time series representing a historical trajectory 208 and a future trajectory time series representing a future trajectory 210. As described above, whilst each trajectory time series 302 is formed of a historical trajectory time series 208 and a future trajectory time series 210, in the context of a training dataset, both the historical trajectory time series 208 and the future trajectory time series 210 may comprise measured geographic locations occupied by an object at different times during a single trajectory.

The training data set 304 is used in a training process 306 to produce a trained trajectory prediction model 308. The training process 306 may comprise one or more machine learning processes. The trajectory prediction model 308 may be configured to receive a historical trajectory time series 208 and determine a predicted future trajectory time series 210 based on the historical trajectory time series 210. In some examples, the trajectory prediction model 308 may comprise a plurality of configurable model parameters (e.g., biases, weights etc.), which determine a mapping of a historical trajectory time series to a corresponding future trajectory time series. The training process 306 may comprise determining model parameters of the trajectory prediction model which best map the historical trajectory times series 208 in the training data set 304 to their corresponding future trajectory time series 210. For example, one or more machine learning processes may be used to learn model parameters which minimise a cost function representing a difference between future trajectory time series predicted by the trajectory prediction model 308 (for the historical trajectory time series 208 in the training data set 304) and future trajectory time series 210 in the training data set 304.

As explained above, the training data set 304 comprises at least a plurality of trajectory time series 302. The trajectory time series 302 comprise at least a time series of geographic locations representing the geographic position of an object during a trajectory of the object. A trajectory time series 302 includes at least some form of information in order to be able to deduce the time ordering of the geographic locations. For example, the geographic locations may be ordered in the time series in time order. A trajectory time series 302 may include one or more further fields which indicate a time ordering of locations, for example in the form of a simple time index and/or a time stamp associated with each location. A trajectory time series may additionally be associated with or include an identifier for identifying the object (which may be referred to as an agent) which underwent the trajectory associated with the trajectory time series.

In some examples, a trajectory time series may be supplemented by one or more additional features determined through a feature engineering process. Feature engineering is a process in which additional information is deduced from the available trajectory time series and included in the training data set 304 . One or more features determined through feature engineering may, for example, include one or more of: a distance (e.g., euclidean distance) between different locations (e.g., consecutive positions) in a trajectory time series 302, a slope or gradient of vectors determined from the locations in the trajectory time series 302, and/or an aggregated measure of speed of the object represented by the trajectory time series 302.

In some examples, the trajectory time series 302 in a training data set 304 may include feature lagging. For example, each entry (row) of a trajectory time series 302 may be associated with one or more previous (in time order) in the trajectory time series 302. For example, each row entry in a trajectory time series may include values of one or more features (e.g., geographic location etc.) associated with the time point which is represented by the row entry and corresponding values of the one or more features associated with $l$ preceding row entries. A typical value of $l$ may, for example, be 10, such that each row entry includes feature values from 10 preceding row entries. In some examples, row entries may also include one or more feature values lagged forward in time. For example, a row entry may also include feature values associated with f proceeding row entries in a time series. In particular, the feature values associated with the geographic locations (e.g., latitude, longitude) may be lagged forward in time in order to include information regarding the future position of the object in each entry. A typical value of f may, for example, be 5, such that each row entry includes features values from 5 proceeding row entries.

In some examples, the trajectory prediction model 308 may comprise a tree-based architecture and/or may utilise gradient boosting. For example, the trajectory prediction model 308 may comprise the Light Gradient-Boosting Machine (LightGBM) model or the eXtreme Gradient Boosting (XGBoost) model.

The performance of trajectory prediction model may be evaluated (e.g.,during training and/or after training using a validation data set) using a measure of the accuracy of trajectory predictions generated. A suitable measure of the accuracy of trajectory predictions may comprise one or more of a Final Displacement Error (FDE) and Average Displacement Error (ADE). A FDE is a measure of a distance (e.g., euclidean distance) between final points of a true and predicted trajectory. An FDE may be calculated according to equation (1) below, where $lat_F$ and $long_F$ are the latitude and longitude of the final position in a measured trajectory respectively and $lat_F^{pred}$ and $long_F^{pred}$ are the final position in a predicted trajectory respectively.

$$FDE = \sqrt{(lat_F - lat_F^{pred})^2 + (long_F - long_F^{pred})^2}$$

$$(1)$$

An ADE may be calculated according to equation (2) below, where $lat_i$ and $long_i$ are the latitude and longitude of the $i$-th geographic location in a measured trajectory respectively and $lat_i^{pred}$ and $long_i^{pred}$ are the latitude and longitude of the $i$-th geographic location in a corresponding predicted trajectory respectively, and where both the measured and predicted trajectory include F geographic locations.

$$ADE = \frac{1}{F} \sum_{i=1}^{F} \sqrt{(lat_i - lat_i^{pred})^2 + (long_i - long_i^{pred})^2}$$

(2)

A trained trajectory prediction model 308 may be used in a model inference process to predict an unknown future trajectory time series of an object which has undergone a historical trajectory represented by a historical trajectory time series. FIG. 4 is a schematic illustration of a model inference process. As represented in FIG. 4 a historical trajectory time series 208 may be provided as an input to a trained trajectory prediction model 308. For example, the trajectory prediction model 308 may be trained based on a training data set 304 as described above with reference to FIG. 3. When operated in an inference mode the trained trajectory prediction model 308 may use model parameters learnt through training to determine a future trajectory time series 210 for the input historical trajectory times series 208. The determined future trajectory time series 210 forms a prediction of a future trajectory of an object which has undergone the historical trajectory time series 208.

Trajectory prediction models 308 may find a number of different uses and applications. For example, a trajectory prediction model may be used to predict future trajectories of objects such as vehicles and/or pedestrians in order to assist with processes such as autonomous driving, traffic management and/or collision avoidance. Accurate trajectory prediction models can therefore contribute to improvements in traffic management and road safety.

Trajectory prediction models 308 can suffer from a problem in which the accuracy of the trajectory prediction model 308 can significantly decrease when faced with situations and environments which differ from the situations and environments represented by a training data set 304 on which the trajectory prediction model 308 is trained. For example, a trajectory prediction model 308 may provide relatively accurate trajectory prediction in geographic regions and/or situations which are well-represented by the training data set 304. However, for geographic regions and/or situations which are not represented by the training data set 304, the accuracy of the trajectory prediction model 308 may be degraded. Put another way, when faced with prediction in unseen or out-of-sample domains, the accuracy of a trajectory prediction model 308 may decrease.

It has been realised that the accuracy of a trajectory prediction model 308 may be improved if the trajectory prediction model 308 is trained on a generalised training data set which is representative of a wider range of geographic regions and/or situations. Various methods are described herein for generating a training data set 304 for a trajectory prediction model 308 which serve to improve the accuracy of the trajectory prediction model 308 trained on the training data set 304.

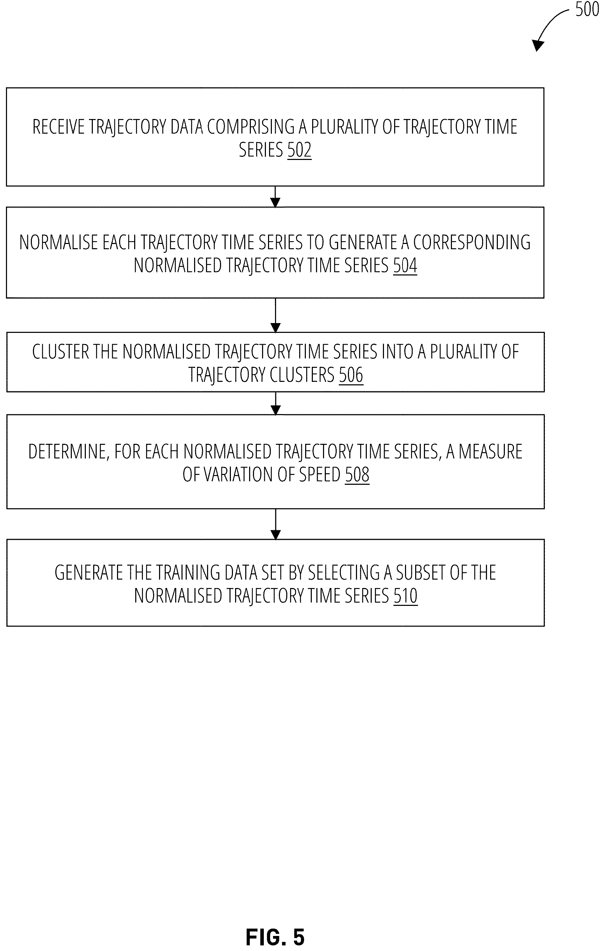

FIG. 5 is a flowchart of a method of generating a training data set 304 for a trajectory prediction model 308. The method 500 may be implemented using one or more computing devices. At step 502, trajectory data is received. For example, the trajectory data may be received at a computing device implementing all or part of the method 500 over a network connection from one or more other computing devices. Additionally or alternatively, receiving the trajectory data may comprise retrieving trajectory from computer memory. The trajectory data comprises a plurality of trajectory time series, each comprising a time series of geographic locations representing the geographic position of an object during a trajectory of the object. The trajectory time series may have any of the features described above. For example, the trajectory time series may each comprise a time-ordered list of geographic locations. The geographic locations may, for example, be represented using any suitable coordinate system such as latitude and longitude. The trajectory time series may comprise one or more additional properties such as a time stamp associated with each location and/or a speed at which the object is moving at each location. The plurality of trajectory time series may for example comprise measured locations of one or more objects (e.g., vehicles) thereby representing real trajectories which one or more real objects have undergone.

As was explained above, for the purposes of training a trajectory prediction model 308, each trajectory time series may conceptually be considered to comprise a historical trajectory time series labelled with a known future time series. However, for the purposes of the method 500 of FIG. 5, no distinction needs to be made between sections of a trajectory time series which may be considered to represent a historical trajectory time series and a future trajectory time series when training the model.

At step 504 each trajectory times series in the received trajectory data is normalised to generate a corresponding normalised trajectory time series. Normalising a trajectory time series comprises transforming each geographic location in the trajectory time series to a positional difference relative to a local reference point for that trajectory time series. The positional difference relative to the local reference point may be represented in any suitable coordinate system. For example, the positional difference may be represented as a difference in latitude between the local reference point and a geographic location in the trajectory time series and a difference in longitude between the local reference point and the geographic location in the trajectory time series. In general, however any suitable coordinate system may be used to represent a positional difference.

To provide an illustrative example, each geographic location in a trajectory time series may be represented by ($x_i$, $y_i$) where x represents a position in a first dimension (e.g., a longitude) and y represents a position in a second dimension (e.g., a latitude). The subscript i denotes an index in the trajectory time series, where $i=1,2,...,n$ and $n$ is the number of locations in the trajectory time series. Each location in the trajectory time series may correspond to a geographic location of the represented object at a time $t_i$.

Each location ($x_i,y_i$) in a trajectory time series may be transformed to a corresponding location ($\Delta x_i, \Delta y_i$) in a normalised trajectory time series, calculated according to equation (3) below in which the local reference point for the trajectory has a location given by ($x_r, y_r$).

$$\Delta x_i = |x_i - x_r|, \Delta y_i = |y_i - y_r|$$

$$(3)$$

In at least examples, the local reference point may be a starting point ($x_0,y_0$) of the trajectory time series.

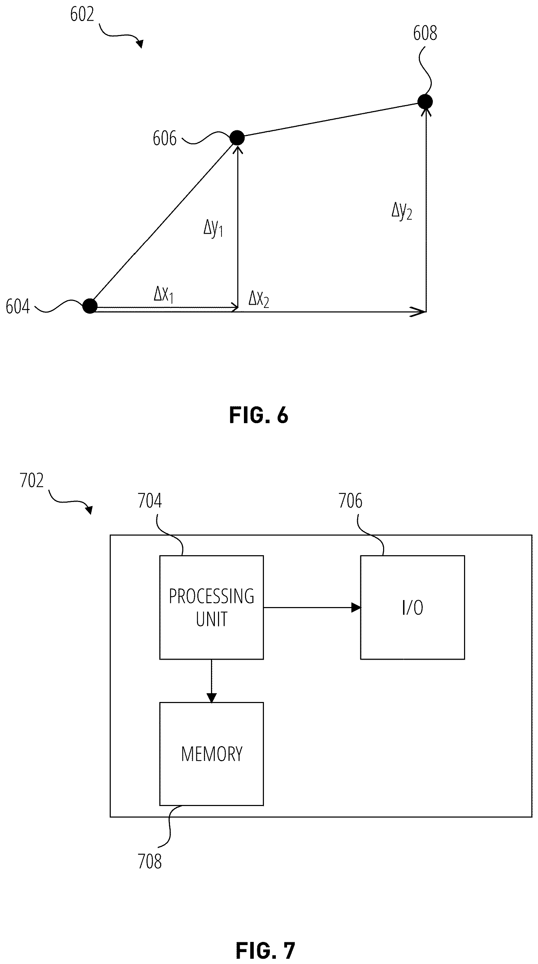

FIG. 6 is a schematic illustration of a trajectory 602. The trajectory 602 shown in FIG. 6 may be represented by a trajectory time series comprising a first location 604 having coordinates ($x_0,y_0$), a second location 606 having coordinates ($x_1,y_1$) and a third location 608 having coordinates ($x_2,y_2$). A corresponding normalised trajectory time series may be generated by transforming each location 604, 606, 608 to a positional difference relative to a local reference point which may comprise the first location 604. The normalised trajectory time series then becomes (0,0) for the first location 604, ($\Delta x_1, \Delta y_1$) for the second location 606 and ($\Delta x_2, \Delta y_2$) for the third location 608, where $\Delta x_i$ and $\Delta y_i$ are calculated according to equation (3) above and are represented with arrows in FIG. 6.

Generating normalised trajectory time series serves to detrend the trajectory time series of their dependence on the geographic regions in which the respective trajectories occurred. In particular, each normalised trajectory time series does not depend on the geographic region (e.g., country, state, county, city, street etc.) in which it occurred. The normalised trajectory time series instead depend on the local shape of the trajectories and different trajectories occurring in different geographic regions but having similar trajectory shapes will generate similar normalised trajectory time series.

At step 506 of the method 500 of FIG. 5 the normalised trajectory times series are clustered into a plurality trajectory clusters. The clustering of normalised trajectory time series is performed such that similar normalised trajectory time series are clustered together in the same cluster. For example, normalised trajectory time series representing similar local trajectory shapes may be clustered into the same cluster as each other and normalised trajectory time series representing different local trajectory shapes may be clustered into different clusters.

In some example, the clustering of normalised trajectory times series may comprise determining whether each normalised trajectory time series represents a linear trajectory or a non-linear trajectory. Normalised trajectory times series which are determined to represent a linear trajectory may then be assigned to one or more linear trajectory clusters. Normalised trajectory time series which are determined to represent a non-linear trajectory may then be clustered into a plurality of non-linear trajectory clusters (e.g., according to their non-linear trajectory shape).

It has been realised that often a relatively large proportion (e.g., a majority) of observed trajectories comprise linear trajectories. For example, in examples in which the trajectory data represents trajectories of vehicles driving along roads, a relatively large proportion of recorded trajectories may represent vehicles driving along straight sections of road. Such trajectories will have a linear shape corresponding to the linear trajectory of the vehicle along the straight section of road. Determining which normalised trajectory time series represent linear trajectories and which normalised trajectory time series represent non-linear trajectories can simplify the clustering process by grouping linear trajectories (which may form a relatively large proportion of all trajectories) into the same cluster and then using more complex clustering techniques to cluster non-linear trajectories.

Determining whether a normalised trajectory time series represents a linear trajectory or a non-linear trajectory may comprise fitting a linear function to the normalised trajectory time series and determining a measure of difference between the fitted linear function and the normalised trajectory time series. For example, a linear function of the form shown in equation (4) below may be fitted to a normalised trajectory time series, where the normalised trajectory time series comprises positional differences ($\Delta x_i, \Delta y_i$) as described above with reference to equation (3).

$$\Delta y_i = \beta_0 + \beta_1 \Delta x_i$$

$$(4)$$

$\beta_0$ and $\beta_1$ comprise regression coefficients determined through linear regression. In particular, $\beta_0$ comprises an intercept or offset and $\beta_1$ comprises a gradient of the linear fit. Linear regression may be performed to determine values of $\beta_0$ and $\beta_1$ which best fit the positional differences ($\Delta x_i, \Delta y_i$) in the normalised trajectory time series.

How well a determined linear function represents a normalised trajectory time series may then be determined by determining residuals (or errors) $\varepsilon_i$ for each location in a normalised trajectory time series, as given in equation (5) below.

$$\varepsilon_i = \Delta y_i - (\beta_0 + \beta_1 \Delta x_i)$$

$$(5)$$

The residuals $\varepsilon_i$ represent a difference between each location in the normalised trajectory time series and the linear fit to the normalised trajectory time series. The residuals $\varepsilon_i$ may be used to determine an overall measure of difference between the normalised trajectory time series and the fitted linear function. For example, a suitable measure of difference between the normalised trajectory time series and the fitted linear function may comprise a sum or average (e.g., mean) of the absolute values of the residuals.

A determined measure of difference between the normalised trajectory time series and the fitted linear function may then be compared to a threshold measure of difference to determine whether the normalised trajectory time series represents a linear trajectory or a non-linear trajectory. For example, if the determined measure of difference (e.g., average of residuals $\varepsilon_i$) between the normalised trajectory time series and the fitted linear function is less than a threshold measure of difference then it may be determined that the normalised trajectory time series represents a linear trajectory. If the determined measure of difference (e.g., average of residuals $\varepsilon_i$) between the normalised trajectory time series and the fitted linear function is greater than the threshold measure of difference, then it may be determined that the normalised trajectory time series represents a non-linear trajectory.

As described above, the determination of whether each normalised trajectory time series represents a linear trajectory or a non-linear trajectory provides and efficient way in which to separate relatively simple and commonly occurring trajectories from more complex non-linear trajectory shapes.

Normalised trajectory time series which are determined to represent non-linear trajectories may be clustered into a plurality of non-linear trajectory clusters. Clustering of non-linear normalised trajectory time series may be performed using any suitable clustering method or algorithm. For example, a K-means clustering method may be used to cluster non-linear normalised trajectory time series into a plurality of non-linear trajectory clusters. In particular, since the normalised trajectory time series comprise time series a TimeSeriesKMeans [1], [2], [3] algorithm may be used to cluster the normalised trajectory time series. The TimeSeriesKMeasn algorithm is an adaption of the K-means clustering method for use in clustering time series data.

Clustering methods typically utilise some measure of similarity, difference and/or distance between elements to be clustered such that the elements can be arranged in clusters along with other elements having similar properties or characteristics. In the context of normalised trajectory time series a suitable measure of similarity between different normalised trajectory time series may be determined and used to cluster normalised trajectory time series. In at least some examples, Dynamic Time Warping (DTW) [4] may be used to determine a distance (which is a form of a measure of similarity) between normalised trajectory time series. DTW is a method of determining the similarity of (or equivalently distance between) two time series. In particular, DTW accounts for temporal distortions, which allows for its use to compare time series with different temporal lengths, temporal misalignments and non-linear alignments. It has been found that DTW can be a particularly effective method for comparing non-linear trajectory time series.

For a first trajectory time series $T_1$ and a second trajectory time series $T_2$ comprising a time series of positional differences ($\Delta x_i, \Delta y_i$) as described above, a DTW distance $D(T_1, T_2)$ may be determined according to equation (6) below, where $w_i$ represents a warping path between components in the trajectory time series $T_1, T_2$.

$$D(T_1, T_2) = min \sum_{i=1}^{n} w_i \left( \left( \Delta x_{1,i} - \Delta x_{2,w_i} \right)^2 + \left( \Delta y_{1,i} - \Delta y_{2,w_i} \right)^2 \right)$$

$$(6)$$

The use of the warping path $w_i$ is determined (under the minimisation condition in equation (6)) to match different elements of the trajectory time series $T_1$, $T_2$ which minimises dissimilarity between matched elements. In this way a matching or warping path $w_i$ is found which minimised the DTW distance $D(T_1, T_2)$. Such a DTW method is useful for comparing time series which represent trajectories which develop differently in time and/or speed but which exhibit a similar shape. In such a scenario the DTW distance between time series may be relatively small (indicating a high degree of similarity) where one or more other measures of distance between the time series (e.g., Euclidean distance) may be relatively high (indicating a low degree of similarity) due to the different development of the trajectories in time and/or speed.

In at least some examples, a DTW distance $D(T_1, T_2)$ between non-linear normalised trajectory time series may be used to perform TimeSeriesKMeans method to cluster non-linear trajectory time series into a plurality of non-linear trajectory clusters. The performance of the clustering may be evaluated using a performance score such as a silhouette score. The silhouette score is a measure of how similar each normalised trajectory time series is to other normalised trajectory time series in the same cluster compared to normalised trajectory time series in other clusters. A silhouette score $s(i)$ may determined according to equation (7) below, where $a(i)$ is an average distance between a particular normalised trajectory time series and other normalised trajectory time series in the same cluster and $b(i)$ is a minimum average distance from the particular normalised trajectory time series to normalised trajectory time series in another cluster. The distance measure used to determine $a(i)$ and $b(i)$ may comprise a DTW distance as described above.

$$s(i) = \frac{b(i) - a(i)}{max\{a(i), b(i)\}}$$

$$(7)$$

A relatively high silhouette score $s(i)$ indicates that the particular normalised trajectory time series (for which the score is determined) is much more similar to other normalised trajectory time series in its own cluster than to normalised trajectory time series in any other cluster. A relatively low silhouette score $s(i)$ indicates that the particular normalised trajectory time series (for which the score is determined) is more similar to other normalised trajectory time series in another cluster than to other normalised trajectory time series in its own cluster.

A silhouette score $s(i)$ may be determined for each normalised trajectory time series. If a large proportion of silhouette scores $s(i)$ are relatively high then the clusters may be considered to be effective. If there is a significant portion of silhouette scores $s(i)$ which are relatively low then the clustering may not be considered to be effective and changes to the clusters and/or clustering method may be made. For example, a number of clusters into which the non-linear trajectory time series are grouped may be increased or decreased in order improve the effectiveness of the clustering and to obtain high silhouette scores $s(i)$.

The clustering performed at step 506 as described above may be used to group normalised trajectory time series together in terms of their properties (such as trajectory shape). As will be described above, the clustering allows for sampling of normalised trajectory time series so as to generate a generalised and balanced training data set.

At step 508 a measure of variation of speed may be determined for each normalised trajectory time series. The measure of variation of speed for a normalised trajectory time series is a measure of the variation of speed of the object whose trajectory is represented by the normalised trajectory time series. In particular, the measure of variation of speed for a normalised trajectory time series is a measure of the variation of speed of the object during the trajectory which is represented by the normalised trajectory time series.

As was described above, a trajectory time series and a corresponding trajectory time series may include a time stamp associated with each location in the time series. Such time stamps may be used to determine the speed of the object for each entry in the time series. For example, a distance between adjacent locations in the time series may be determined and divided by a difference in time stamp associated with the adjacent locations to calculate a speed of the object when travelling between the adjacent locations. In some examples, a speed of the object may be represented as speeds $v_i$ corresponding to each entry $i$ in the normalised trajectory time series and times $t_i$. The speeds $v_i$ may be calculated according to equation (8) below.

$$v_i = \frac{\sqrt{(\Delta x_{i+1} - \Delta x_i)^2 + (\Delta y_{i+1} - \Delta y_i)^2}}{t_{i+1} - t_i}$$

$$(8)$$

In some examples, a trajectory time series and/or a normalised trajectory time series may not include explicit time stamps but the locations in the time series may be determined for known time intervals. The known time intervals may then be used to determine speed in a corresponding manner. In some examples, speed may be included as a further property in a trajectory time series and/or normalised trajectory time series such that speed information is already included in the time series.

As was explained the speed of an object during a trajectory may be determined from information included in a normalised trajectory time series or may already be included in a normalised trajectory time series. The measure of variation of speed determined for each normalised trajectory time series may comprise a variance of the speed of the object during the trajectory. For example, for speeds $v_i$ corresponding to each entry i in a normalised trajectory time series, a speed variance $\sigma^2$ may be determined for the normalised trajectory time series according to equation (9) below, where $\bar{v}$ is a mean of the speeds $v_i$.

$$\sigma^2 = \frac{1}{n-1} \sum_{i=1}^{n} (v_i - \bar{v})^2$$

$$(9)$$

In equation (9) above a sample variance of speed is determined. In other examples a population variance may instead be determined and used. In general any suitable measure of variance or variation which characterises variation in speed during a trajectory may be used.

A measure of variation of speed, as described above, has been found to be a useful measure for characterising trajectories. For example, a measure of variation of speed may be a determining factor for the length and/or shape of the trajectory. A measure of variation of speed has thus been found to be an effective characterising property of trajectories, which can be used to sample trajectories to achieve a balanced and generalised training dataset.

At step 510 a training dataset is generated by selecting a subset of the normalised trajectory time series. The subset of the normalised trajectory time series is selected by sampling normalised trajectory time series from each of the trajectory clusters and in dependence on the measures of variation of speed of the normalised trajectory time series in each trajectory cluster.

Sampling normalised trajectory time series from each of the trajectory clusters comprises selecting one or more normalised trajectory time series from each of the trajectory clusters and including the selected normalised trajectory time series in the subset of the normalised trajectory time series. In this way trajectories corresponding to a range of different trajectory shapes (including linear trajectories and a range of different non-linear trajectory types) are included in the selected subset of normalised trajectory time series.

Sampling normalised trajectory time series from each of the trajectory clusters may comprise sampling substantially evenly from each trajectory cluster. For example, the same or a similar number of normalised trajectory time series may be selected from each trajectory cluster. In this way a balanced sample is taken across a range of different trajectory types and ensures that no particular type of trajectory is over or under-represented in the selected subset of the normalised trajectory time series.

Sampling (from each trajectory cluster) in dependence on measures of variation of the normalised trajectory time series may comprise, for each trajectory cluster, binning the normalised trajectory time series in that cluster into a plurality of speed bins based on the measure of variation of speed determined for each normalised trajectory time series in that trajectory cluster. For example, any suitable method of data binning may be used to bin normalised trajectory time series into a series of speed bins and according to their corresponding determined measure of variation of speed.

In some examples, linear partitioning may be used to create B bins of equal width for each trajectory cluster. Edges of the B bins may be defined according to equation (10) below where $bin\_edge_k$ is the position of a *k-th* bin edge, *k* is an index used to denote different edges of the *B* bins, and *min_speed_var* and *max_speed_var* are respectively the minimum and maximum measure of variation of speed in the trajectory cluster.

$$bin\_edge_k = min\_speed\_var + k \frac{max\_speed\_var - min\_speed\_std}{B}, \text{for } k \in \{0,1,2..B\}$$

$$(10)$$

A typical value of B may be about 3 such that 3 speed bins are created for a trajectory cluster. In some examples, the number of bins B may be the same for each trajectory cluster.

Normalised trajectory time series may then be sampled from each of the speed bins. For example, trajectory time series may be sampled from each speed bin in each trajectory cluster to form the selected subset of normalised trajectory time series. That is the selected subset of normalised trajectory time series may include at least one normalised trajectory time series sampled from each speed bin in each trajectory cluster.

Sampling normalised trajectory time series from each speed bin of a trajectory cluster may comprise sampling substantially evenly from each of the speed bins. For example, a similar number or substantially the same number of normalised trajectory time series may be sampled (selected) from each speed bin.

In other examples, a weighted sampling may be used to sample different numbers of normalised trajectory time series from different speed bins. For example, for each speed bin $b$ a sampling weight $w_b$ may be calculated according to equation (11) below, where $min\_speed\_var_b$ and $max\_speed\_var_b$ are respectively the minimum and maximum measure of variation of speed in the $b$-th bin.

$$w_b = 1 - \left(\frac{min\_speed\_var_b}{max\_speed\_var_b}\right)$$

$$(11)$$

A bin $b$ which includes a relatively large difference between the maximum and minimum measure of variation of speed in that bin will therefore have a larger sampling weight $w_b$ than a bin b which includes a relatively small difference between the maximum and minimum measure of variation of speed in that bin.

A number $s_b$ of normalised trajectory time series to be sampled from each bin may be calculated according to equation (12) below in which $N_s$ is the total number of normalised trajectory time series to be sampled from all bins b, and ceil is a function which rounds up to the nearest integer.

$$s_b = \text{ceil}\left(\frac{N_s w_b}{\sum_{b=1}^{B} w_b}\right)$$

$$(12)$$

A weighted sampling as described above will sample more normalised trajectory time series from bins which include a large range (difference between minimum and maximum) of values of the measure of variation of speed.

One or more normalised trajectory time series may be sampled from each speed bin using any suitable sampling method. For example, within each speed bin of each trajectory cluster, random sampling may be used to select one or more normalised trajectory time series from that speed bin.

By sampling from each trajectory cluster and in dependence on the determined measure of variation of speed, a balanced subset of the normalised trajectory time series may be selected. The selected subset of the normalised trajectory time series may include a balanced representation of normalised trajectory time series representing a range of different trajectory types. The generated training data set comprises the selected subset of the normalised trajectory time series and provides a generalised and balanced training data set for use in training a trajectory prediction model.

The training data set may be supplemented with one or more additional features determined through feature engineering, as described above with reference to the training data set 304 of FIG. 3. Additionally or alternatively, data included in the training data set may be lagged to incorporate feature values from one or both of preceding and proceeding row entries as described above.

Methods are also contemplated herein in which a training data set generated according to the methods disclosed herein (e.g., according to the method 500 of FIG. 5) are used to train a trajectory prediction model. As was described above, the trajectory prediction model may be configured through training to predict a future trajectory of an object based on a historical trajectory of the object.

A trajectory prediction model may be trained using a training data set generated according to a method described herein and using any of the features described above with reference to FIG. 3. For example, a trajectory prediction model trained using a training data set as contemplated herein may comprise a tree-based architecture and/or may utilise gradient boosting. For example, the trajectory prediction model may comprise the Light Gradient-Boosting Machine (LightGBM) model or the eXtreme Gradient Boosting (XGBoost) model.

Methods are also contemplated herein in which a trained trajectory model is used in an inference mode to predict a future trajectory of an object based on its historical trajectory. Such methods may comprise receiving historical trajectory data indicative of a trajectory that the object has undergone. The historical trajectory data may comprise a trajectory time series as described herein. The historical trajectory data may be include or at least be based on measurements of the location of the object during its trajectory. The historical trajectory data may be provided to a trajectory prediction model trained using any of the methods described herein. The trained trajectory prediction model may then be implemented to predict a future trajectory of the object based on the historical trajectory. For example, the trained trajectory prediction model may provide, as an output, a trajectory time series representing a predicted future trajectory of the object.

It has been found that the method described herein can be used to improve the accuracy of a trajectory prediction model. In particular, by generating a generalised and balanced training data set as described herein, a trajectory prediction model trained using such a training data set may exhibit improved accuracy when faced with out of sample or out of domain situations.

Various methods have been described herein in which some of the method steps may be implemented on any suitable electronic device (such as a computing device) and/or combination of electronic devices (e.g. computing devices). FIG. 7 is a schematic illustration of an example electronic device 702 which may be used to implement all or part of any method described herein. For example, an electronic device 702 of the type shown in FIG. 7 and as described below may be used to implement all or part of a method of generating a training data set, a method for training a trajectory prediction model, and/or a method of predicting a future trajectory of an object as described herein. For example, one or more electronic device 702 of the type shown in FIG. 7 and as described below may be used to implement all or part of a method 500 as described above with reference to FIG. 5.

The electronic device 702 may comprise a computing device. The electronic device 702 may include at least one processing unit 704, memory 708 and an input/output interface 706 (I/O). The processing unit 704 may include any suitable processor and/or combination of processors. For example, the processing unit 704 may include one or more of a Central Processing Unit (CPU) and a Graphical Processing Unit (GPU). The memory 708 may include volatile memory and/or non-volatile/persistent memory. The memory 708 may, for example, be used to store data such as an operating system, instructions to be executed by the processing unit (e.g. in the form of software to be executed by the processing unit), configuration information related to the electronic device 702, session information and/or configuration or registration information associated with any other device, node or module in the network. In some examples, the memory 708 may be used to store instructions for executing any of the methods disclosed herein.

At least the processing unit 704 is connected to the input/output interface 706. The input/output interface 706 may facilitate communication with one or more other devices. For example, the input/output interface 706 may be operable to transmit and/or receive communications to/from other devices in a network. The input/output interface 706 may, for example, comprise one or more antennas to facilitate wireless communication with one or more other devices and/or wired interfaces to facilitate wired communication with one or more other devices.

Optionally, the electronic device 702 may further include a display (not shown). The display may comprise any suitable electronic display such as a touch sensitive display. The display may be connected to at least the processing unit 704. The processing unit 704 may generate display signals which are sent to the display in order to cause the display information.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

References

[1] Hiroaki Sakoe and Seibi Chiba, "Dynamic programming algorithm optimization for spoken word recognition", IEEE transactions on acoustics, speech, and signal processing, 26.1 (1978), pp. 43-49

[2] URL: https://tslearn.readthedocs.io/en/latest/gen_modules/cl us tering/tslearn. clustering. TimeSeries KMeans. html#tslearn.clustering. TimeSeriesKMeans.

[3] URL: https://tslearn.readthedocs.io/en/latest/auto_examples/clustering/plot_kmeans.html#sphx-glrauto- examples-clustering-plot-kmeans-py

[4] Marco Cuturi and Mathieu Blondel. "Soft-dtw: a differentiable loss function for time-series". In: International conference on machine learning. PMLR. 2017, pp. 894-903.

**Claims**

1. A computer implemented method of generating a training data set for a trajectory prediction model, the method comprising:

   receiving trajectory data comprising a plurality of trajectory time series each trajectory time series comprising a time series of geographic locations representing the geographic position of an object during a trajectory of the object;
   normalising each trajectory time series to generate a corresponding normalised trajectory time series, wherein normalising each trajectory time series comprises transforming each geographic location in the trajectory time series to a positional difference relative to a local reference point for that trajectory time series;
   clustering the normalised trajectory time series into a plurality of trajectory clusters;
   determining, for each normalised trajectory time series, a measure of variation of speed of the object during the trajectory represented by the normalised trajectory time series; and
   generating the training data set by selecting a subset of the normalised trajectory time series, wherein the subset of the normalised trajectory time series is selected by sampling normalised trajectory time series from each of the trajectory clusters in dependence on the measures of variation of speed of the normalised trajectory time series in each trajectory cluster.

2. The computer implemented method of claim 1, wherein the local reference point for that trajectory time series comprises a starting point of the trajectory time series.

3. The computer implemented method of claim 1 or 2, wherein clustering the normalised trajectory time series into a plurality of trajectory clusters comprises:

   determining whether each normalised trajectory time series represents a linear trajectory or a non-linear trajectory,
   assigning the normalised trajectory time series representing linear trajectories to a linear trajectory cluster; and
   clustering the normalised trajectory time series representing non-linear trajectories into a plurality of non-linear trajectory clusters.

4. The computer implemented method of claim 3, wherein determining whether each normalised trajectory time series represents a linear trajectory or a non-linear trajectory comprises, for each normalised trajectory time series:

   fitting a linear function to the normalised trajectory time series;

determining a measure of the difference between the fitted linear function and the normalised trajectory time series; and

determining that the normalised trajectory time series is a linear trajectory if the determined measure of difference is below a threshold difference.

5. The computer implemented method of any one of claims 1 to 4, wherein clustering the normalised trajectory time series into a plurality of trajectory clusters comprises determining a measure of similarity between different normalised trajectory time series and clustering the normalised trajectory time series into the plurality of trajectory clusters in dependence on the determined measure of similarity.

6. The computer implemented method of claim 5, wherein determining the measure of similarity between different normalised trajectory time series comprises performing dynamic time warping to determining a dynamic time warping distance between different trajectory time series.

7. The computer implemented method of any one of claims 1 to 6, wherein the measure of variation of speed of the object during the trajectory represented by the normalised trajectory time series comprises a variance of the speed of the object during the trajectory.

8. The computer implemented method of any one of claims 1 to 7, wherein sampling normalised trajectory time series from each of the trajectory clusters comprises sampling substantially evenly from each trajectory clusters.

9. The computer implemented method of any one of claims 1 to 8, wherein sampling normalised trajectory time series from each of the trajectory clusters comprises:

for each trajectory cluster, binning the normalised trajectory time series in the trajectory cluster into a plurality of speed bins based on the measure of variation of speed determined for each normalised trajectory time series; and sampling normalised trajectory time series from each of the speed bins of each of the trajectory clusters.

10. The computer implemented method of claim 9, wherein sampling normalised trajectory time series from each of the speed bins of each of the trajectory clusters comprises sampling substantially evenly from each of the speed bins.

11. The computer implemented method of claim 9, wherein sampling normalised trajectory time series from each of the speed bins of each of the trajectory clusters comprises performing a weighted sampling from each of the speed bins.

12. The computer implemented method of claim 11, wherein the weighted sampling comprises:

determining a weight for each speed bin; sampling a number of normalised trajectory time series from each speed bin wherein the number of normalised trajectory time series sampled from each speed bin is proportionally to the weight determined for that speed bin.

13. A computer implemented method of training a trajectory prediction model, the method comprising:

receiving a training data set generated using a method according to any one of claims 1 to 12, and training the trajectory prediction model based on the training data set, wherein the trajectory prediction model is configured through the training to predict a future trajectory of an object based on a historical trajectory of the object.

14. A computer implemented method of training a trajectory prediction model, the method comprising:

generating a training data set for a trajectory prediction model using a method according to any one of claims 1 to 12, and training the trajectory prediction model based on the training data set, wherein the trajectory prediction model is configured through the training to predict a future trajectory of an object based on a historical trajectory of the object.

15. A computer implemented method of predicting a future trajectory of an object, the method comprising:

receiving historical trajectory data indicative of a trajectory that the object has undergone;

providing the historical trajectory data to a trajectory prediction model trained using a method according to claim 13 or claim 14; and
implementing the trained trajectory prediction model to predict a future trajectory of the object based on the historical trajectory data.

16. A computing device configured to:

receive trajectory data comprising a plurality of trajectory time series each trajectory time series comprising a time series of geographic locations representing the geographic position of an object during a trajectory of the object;
normalise each trajectory time series to generate a corresponding normalised trajectory time series, wherein normalising each trajectory time series comprises transforming each geographic location in the time series to a positional difference relative to a local reference point for that trajectory time series;
cluster the normalised trajectory time series into a plurality of trajectory clusters;
determine, for each normalised trajectory time series, a measure of variation of speed of the object during the trajectory represented by the normalised trajectory time series; and
generate the training data set by selecting a subset of the normalised trajectory time series, wherein the subset of the normalised trajectory time series is selected by sampling normalised trajectory time series from each of the trajectory clusters in dependence on the measures of variation of speed of the normalised trajectory time series in each trajectory cluster.

17. A computer readable medium storing instructions which when executed by a computing device cause the computing device to:

receive trajectory data comprising a plurality of trajectory time series each trajectory time series comprising a time series of geographic locations representing the geographic position of an object during a trajectory of the object;
normalise each trajectory time series to generate a corresponding normalised trajectory time series, wherein normalising each trajectory time series comprises transforming each geographic location in the time series to a positional difference relative to a local reference point for that trajectory time series;
cluster the normalised trajectory time series into a plurality of trajectory clusters;
determine, for each normalised trajectory time series, a measure of variation of speed of the object during the trajectory represented by the normalised trajectory time series; and
generate the training data set by selecting a subset of the normalised trajectory time series, wherein the subset of the normalised trajectory time series is selected by sampling normalised trajectory time series from each of the trajectory clusters in dependence on the measures of variation of speed of the normalised trajectory time series in each trajectory cluster.

**FIG. 1**

**FIG. 2**

**FIG. 3**

**FIG. 4**

500

RECEIVE TRAJECTORY DATA COMPRISING A PLURALITY OF TRAJECTORY TIME SERIES 502

NORMALISE EACH TRAJECTORY TIME SERIES TO GENERATE A CORRESPONDING NORMALISED TRAJECTORY TIME SERIES 504

CLUSTER THE NORMALISED TRAJECTORY TIME SERIES INTO A PLURALITY OF TRAJECTORY CLUSTERS 506

DETERMINE, FOR EACH NORMALISED TRAJECTORY TIME SERIES, A MEASURE OF VARIATION OF SPEED 508

GENERATE THE TRAINING DATA SET BY SELECTING A SUBSET OF THE NORMALISED TRAJECTORY TIME SERIES 510

**FIG. 5**

602

608

606

604

$\Delta y_1$

$\Delta y_2$

$\Delta x_1$

$\Delta x_2$

## FIG. 6

702

704

706

PROCESSING
UNIT

I/O

MEMORY

708

## FIG. 7

Europäisches
Patentamt
European
Patent Office
Office européen
des brevets

# EUROPEAN SEARCH REPORT

**Application Number**

EP 26 15 1643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/287554 A1 (STEPP NIGEL [US] ET AL) 16 September 2021 (2021-09-16) | 1-3,5, 13-17 | INV.<br>G06N3/08 |
| Y | * paragraph [0021] *<br>* paragraph [0023] *<br>* paragraph [0035] *<br>* paragraph [0052] *<br>* paragraphs [0054], [0055] * | 4,6-12 | G06N20/00 |
| | ----- | | |
| X | CN 118 840 723 A (UNIV SOUTHEAST) 25 October 2024 (2024-10-25)<br>* paragraph [0019] *<br>* paragraph [0021] *<br>* paragraph [0024] * | 1-3,5, 13-17 | |
| | ----- | | |
| Y | CN 118 585 961 B (CAS NANJING ARTIFICIAL INTELLIGENCE INNOVATION RES INSTITUTE) 11 October 2024 (2024-10-11)<br>* paragraphs [0059], [0060] *<br>* paragraph [0068] * | 4,6-12 | |
| | ----- | | |
| A | US 2021/304018 A1 (USMAN MUHAMMAD [US] ET AL) 30 September 2021 (2021-09-30)<br>* the whole document * | 1-17 | **TECHNICAL FIELDS SEARCHED (IPC)**<br><br>G06N<br>G08G |
| | ----- | | |

The present search report has been drawn up for all claims

| Place of search | Date of completion of the search | Examiner |
|---|---|---|
| The Hague | 18 June 2026 | de la Cruz Valera, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 1643

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2026

| Patent document cited in search report | | Publication date | Patent family member(s) | | Publication date |
|---|---|---|---|---|---|
| US 2021287554 | A1 | 16-09-2021 | NONE | | |
| CN 118840723 | A | 25-10-2024 | NONE | | |
| CN 118585961 | B | 11-10-2024 | NONE | | |
| US 2021304018 | A1 | 30-09-2021 | US 2021304018 A1 | | 30-09-2021 |
| | | | WO 2021202613 A1 | | 07-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HIROAKI SAKOE** ; **SEIBI CHIBA**. Dynamic programming algorithm optimization for spoken word recognition. *IEEE transactions on acoustics, speech, and signal processing*, 1978, vol. 26 (1), 43-49

- **MARCO CUTURI** ; **MATHIEU BLONDEL.** Soft-dtw: a differentiable loss function for time-series. *International conference on machine learning. PMLR.*, 2017, 894-903